# EUROPEAN PATENT SPECIFICATION

(11) **EP 0 760 752 B1**
(45) Date of publication and mention of the grant of the patent: **09.09.1998**
(21) Application number: 94919031.8
(22) Date of filing: 09.05.1994
(51) Int. Cl.: B60P 7/08

(54) **A HANDTRUCK PARKING DEVICE**
VORRICHTUNG ZUR STATIONIERUNG VON HANDKARREN
DISPOSITIF DE STATIONNEMENT D'UN CHARIOT A BRAS

(30) Priority: 09.06.1993 SE 9301973
(43) Date of publication of application: 12.03.1997
(73) Proprietor: AB VOLVO, 405 08 Göteborg (SE)
(72) Inventor: JOHANSSON, LARS, S-692 33 KUMLA (SE)
(74) Representative: Mossmark, Anders
(86) International application number: SE9400428
(87) International publication number: WO9429142

(56) References cited:
- EP-A- 0 162 829
- US-A- 2 465 551
- US-A- 3 391 760

## Description

### TECHNICAL FIELD

The present invention relates to a handtruck parking device for use in the transportation of goods on the floor of a truck or lorry for instance, and functioning to prevent the handtruck from moving on the truck floor in an uncontrolled manner when the floor is not fully loaded.

### BACKGROUND ART

When transporting goods on pallets or the like on the floor of a truck, lorry or like vehicle, it is mostly necessary to carry a handtruck to enable the pallets to be moved around on the truck floor and to off-load the pallets or goods at a customer station, irrespective of whether or not the customer has a handtruck.

Hitherto, the handtrucks have often been secured to a pallet or like device, wherewith all hydraulic devices on the handtruck are under pressure and there is a serious risk of oil leaking from the handtruck, which increases the danger of transport personnel slipping on the truck floor. Another way of attempting to prevent uncontrolled movement of a handtruck on the truck floor is to lay the handtruck on its side. In this case, however, the handtruck cannot be used immediately it is lifted to a working position, because it takes time for the oil to return and for the hydraulic system to reach the state required for the handtruck to work satisfactorily, and consequently it is necessary to wait until the handtruck has regained its operative state and can be used. If no efforts are made to secure the handtruck, it will probably move around the truck floor and be damaged or damage the inside surfaces of the truck floor or the goods placed on the floor. A handtruck will normally weigh about 70 kilos and is liable to cause extensive damage, while its heavy weight constitutes a traffic hazard.

SE-B 8402819-0 teaches a device which prevents uncontrolled movement of transported wheeled devices. CH-A 377282 teaches a similar parking device which is placed on both sides of a wheel. These devices, however, are not suitable for parking a handtruck, since the wheels are wedged securely on both sides of a wheel. A handtruck has no space which will allow this solution to be used and the remainder of the truck cannot be unloaded. CH-A 407,877 teaches a wedge of synthetic material which is intended to be wedged firmly between a wheel and a supportive surface.

### BRIEF DISCLOSURE OF THE INVENTIVE CONCEPT

The purpose of the present invention is to avoid the aforementioned drawbacks associated with the transportation of goods on trucks, lorries or like transport vehicles where a handtruck is required to move or to off-load the goods because of their weight and/or because they are stacked on pallets.

A main object of the invention is to provide a device for parking a handtruck on the floor of a truck or like vehicle during transportation, this parking device relieving the handtruck hydraulics.

Another object of the invention is to provide a readily handled device for parking a handtruck on the floor of a truck or like vehicle during transportation.

A further object of the invention is to provide a device for parking a handtruck on the floor of a truck or like vehicle during transportation which is of simple and inexpensive manufacture.

Still another object of the invention is to provide a device for parking a handtruck on the floor of a truck or like vehicle during transportation which can be moved easily between different use positions.

Another object of the invention is to provide a device for parking a handtruck on the floor of a truck or like vehicle during transportation which is friendly to the spine and shoulders of the user and which can be used with very little effort.

Yet another object of the invention is to provide a device for parking a handtruck on the floor of a truck or like vehicle during transportation which will take-up only a small amount of space when not in use and which can be readily secured to the floor or to the sides surrounding the truck floor.

Another object of the invention is to provide a device for parking a handtruck on the floor of a truck or like vehicle during transportation which will enable the handtruck to be parked satisfactorily in the shortest possible time.

Still a further object of the invention is to provide a device for parking a handtruck on the floor of a lorry or like vehicle during transportation which can be used by persons who have only a temporary need for such a device.

Still another object of the invention is to provide a device for parking a handtruck on the floor of a truck or like vehicle during transportation which will not place the hydraulic system under more strain than is necessary, therewith reducing the extent to which the handtruck need be repaired in this respect, and which will prevent the handtruck from bumping into obstacles during transportation.

Still another object of the invention is to provide a device for parking a handtruck on the floor of a truck or like vehicle during transportation which will prevent the handtruck from moving accidently on the floor and therewith cause damage to the goods or items placed on the floor.

These and other objects are achieved in accordance with the invention with a device defined in the introduction which includes a frame structure comprised of four mutually joined frame parts of which one part is longer and thicker than the remaining sides of the frame structure and wherein this side extends at both ends beyond the remainder of the frame structure, i.e. the parts extending generally at right angles to this part are joined to said part slightly inwards from the ends of said part, and wherein the frame cavity defined by said parts is intended to receive a handtruck wheel, whereas that part of the frame which is longer than the remaining parts is intended to receive the remainder of the handtruck and thus take-up essentially the full weight thereof.

The invention will now be described in more detail with reference to the accompanying drawings, in which
Fig. 1 is a view of the inventive parking device from above; and
Fig. 2 shows the inventive parking device from one side.

### DETAILED DESCRIPTION OF A PREFERRED EMBODIMENT OF THE INVENTION

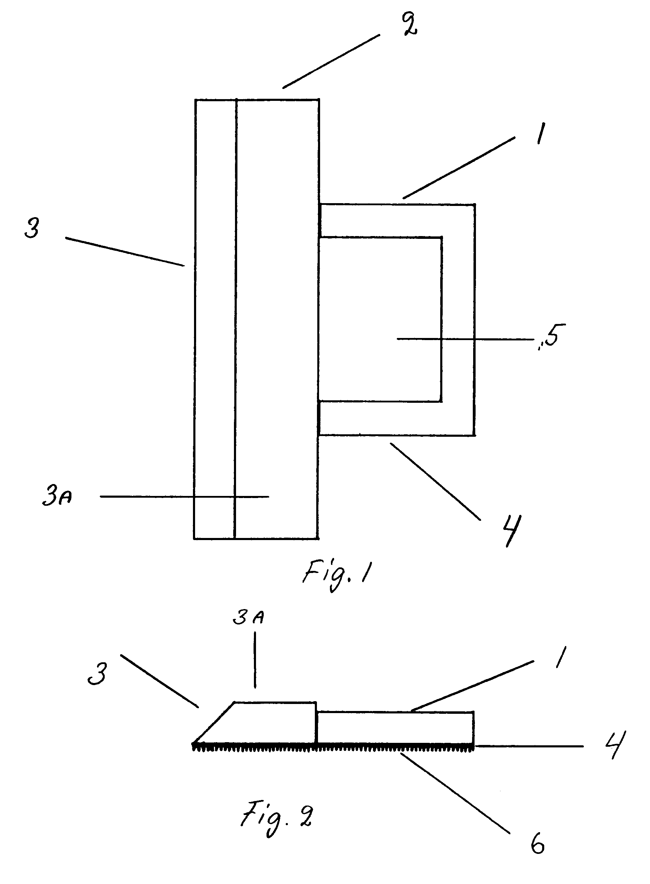

Figs. 1 and 2 illustrate respectively a parking device 1 from above and from one side. The parking device 1 is comprised of two main parts, namely a part 2 on which the wheels of the handtruck are moved up a bevelled surface 3 and from there onto that part 3a of the main part 2 on which the weight of the handtruck will rest when the handtruck is parked, and a frame-like part 4 which defines a cavity 5 in which the wheels of the handtruck are placed when parking the handtruck. The bottom surface 6 of the device, i.e. the surface that rests on the truck floor, is made of a material that possesses a high coefficient of friction or is coated with a material that has a high coefficient of friction, or is provided with feet which are preferably serrated or have a high coefficient of friction. The device may be made of metal, plastic, rubber, wood or some other suitable material. The device may either be solid or comprised of metal plates or like elements welded together to form a box-like configuration.

When using the parking device, the handtruck is positioned on the left of the device, as shown in Fig. 2. The handtruck is then drawn up onto the part 2 of the device, which preferably includes a bevelled surface 3, and then onto the flat surface 3a of the device 2 until the wheels of the handtruck are located in the cavity 5 defined by the frame-like part 4. In this position of the truck, most of the weight of the truck will rest on the flat part 3a of the part 2 and the wheels of the handtruck will be accommodated in the cavity 5. The handtruck thus rests on the flat surface 3a of the part 2 without strain on the hydraulic system. The truck is then secured to the parking device with the aid of a strap for instance, which is positioned to the truck. When wishing to use the handtruck, the strap is loosened from the truck and the handtruck is tipped towards the bevelled part 3 of the part 2 and pulled from the cavity 5 in the frame structure 4, whereafter the parking device is hung on a hook provided on a side wall of the truck floor.

It will be understood that the invention is not restricted to the exemplifying embodiment described and illustrated with reference to the accompanying drawing, and that modifications can be made within the scope of the following Claims.

## Claims

1. A parking device for parking a handtruck on the floor of a truck or like vehicle so as to prevent accidental movement of the handtruck on the floor during movement of the truck, **characterized** in that the device includes a frame-like part (4) which is comprised of four mutually connected frame parts, of which one part (2) is longer and thicker than the remaining sides of the frame; and in that said longer and thicker side extends at both ends beyond the remainder of the frame, i.e. the frame parts that extend generally at right angles to said longer and thicker part (2) are joined thereto slightly inwards from the ends of said part; and in that the cavity (5) defined by the frame is intended to receive the wheels of the handtruck, whereas the upper surface (3a) of the longer and thicker frame part (2) is intended to receive the remainder of the handtruck and thus support the general weight thereof.

2. A parking device according to Claim 1, **characterized** in that the part (3) of the longer and thicker frame part (2) that lies distal from the frame is bevelled downwardly and defines an angle of about 45° with the underlying surface, such as to facilitate movement of the handtruck into the parking device.

## Patentansprüche

1. Parkvorrichtung zum Stationieren eines Handkarrens auf der Ladefläche eines Lastwagens oder eines ähnlichen Fahrzeugs zur Vermeidung einer unbeabsichtigten Bewegung des Handkarrens auf der Ladefläche während der Bewegung des Lastwagens,
dadurch gekennzeichnet,
daß zu der Vorrichtung ein rahmenähnlicher Abschnitt (4) gehört, der aus vier wechselseitig verbundenen Rahmenabschnitten besteht, von denen ein Abschnitt (2) länger und dicker als die übrigen Seiten des Rahmens sind; und
daß die längere und dünnere Seite sich an beiden Enden über den Rest des Rahmens hinauserstreckt, d.h. daß die Rahmenabschnitte, die sich in etwa unter rechten Winkeln zu dem längeren und dickeren Abschnitt (2) erstrecken, mit diesem geringfügig einwärts von den Enden der Abschnitte verbunden sind; und
daß ein von dem Rahmen gebildeter Hohlraum (5) für die Aufnahme der Räder des Handkarrens vorgesehen ist, während die obere Fläche (3a) des längeren und dickeren Rahmenabschnitts (2) zur Aufnahme des restlichen Handkarrens und demzufolge zur Lagerung des Hauptgewichts desselben vorgesehen ist.

2. Parkvorrichtung nach Anspruch 1,
dadurch gekennzeichnet,
daß der Abschnitt (3) des längeren und dickeren Rahmenabschnitts (2), der von dem Rahmen entfernt liegt, nach unten abgeschrägt ist und mit der Unterfläche einen Winkel von etwa 45 Grad zur Erleichterung der Bewegung des Handkarrens in die Parkvorrichtung bildet.

## Revendications

1. Dispositif de stationnement d'un chariot à main sur le plancher d'un camion ou d'un véhicule analogue, afin qu'un déplacement accidentel du chariot à main sur le plancher soit évité lors du déplacement du camion, caractérisé en ce que le dispositif comprend une partie (4) en forme de cadre qui comprend quatre parties de cadre raccordées mutuellement et dont une première partie (2) est plus longue et plus épaisse que les côtés restants du cadre, et en ce que le côté plus long et plus épais s'étend aux deux extrémités au-delà du reste du cadre, c'est-à-dire que les parties de cadre qui s'étendent de façon générale en direction perpendiculaire à la partie plus longue et plus épaisse (2) sont raccordées à celle-ci légèrement vers l'intérieur des extrémités de cette partie, et en ce que la cavité (5) délimitée par le cadre est destinée à loger les roues du chariot à main, alors que la surface supérieure (3a) de la partie plus longue et plus épaisse (2) de cadre est destinée à loger le reste du chariot à main et ainsi à supporter l'essentiel de son poids.

2. Dispositif de stationnement selon la revendication 1, caractérisé en ce que la portion (3) de la partie relativement longue et épaisse (2) de cadre qui est la plus éloignée du cadre est inclinée vers le bas et délimite un angle de 45° environ avec la surface sous-jacente, si bien que le déplacement du chariot à main dans le dispositif de stationnement est facilité.
